# EUROPÄISCHE PATENTSCHRIFT

(11) **EP 3 267 661 B1**
(45) Veröffentlichungstag und Bekanntmachung des Hinweises auf die Patenterteilung: **24.07.2019**
(21) Anmeldenummer: 17174234.9
(22) Anmeldetag: 02.06.2017
(51) Int. Cl.: H04L 29/08

(54) **NETZWERKSYSTEM, CLOUD-CONNECTOR UND VERFAHREN ZUR IDENTIFIKATION VON NETZWERKGERÄTEN**
NETWORK SYSTEM, CLOUD CONNECTOR AND METHOD FOR IDENTIFICATION OF NETWORK DEVICES
SYSTÈME DE RÉSEAU, CONNECTEUR DANS LE CLOUD ET PROCÉDÉ D'IDENTIFICATION D'APPAREILS DE RÉSEAU

(30) Priorität: 06.07.2016 EP 16178191
(43) Veröffentlichungstag der Anmeldung: 10.01.2018
(73) Patentinhaber: Siemens Aktiengesellschaft, 80333 München (DE)
(72) Erfinder: Woronka, Stefan, 38271 Baddeckenstedt (DE)

(56) Entgegenhaltungen:
- DE-A1-102010 063 164
- DE-A1-102013 018 596
- BELLAGENTE PAOLO ET AL: "Enabling PROFINET devices to work in IoT: Characterization and requirements", 2016 IEEE INTERNATIONAL INSTRUMENTATION AND MEASUREMENT TECHNOLOGY CONFERENCE PROCEEDINGS, IEEE, 23. Mai 2016 (2016-05-23), Seiten 1-6, XP032928172, DOI: 10.1109/I2MTC.2016.7520417
- STOREY ET AL: "Network discovery and its security applications", NETWORK SECURITY, ELSEVIER ADVANCED TECHNOLOGY, AMSTERDAM, NL, Bd. 2007, Nr. 3, 1. März 2007 (2007-03-01) , Seiten 15-18, XP022022190, ISSN: 1353-4858, DOI: 10.1016/S1353-4858(07)70028-4

## Beschreibung

Die Erfindung betrifft ein Netzwerksystem, umfassend einem ersten Netzwerkteilnehmer mit mehreren Netzwerkgeräten, wobei die Netzwerkgeräte zur Identifikation Identifikationsparameter aufweisen, einem zweiten Netzwerkteilnehmer mit einer Cloud-Computing-Infrastruktur, sowie einem Cloud Connector mit einer ersten Schnittstelle und einer zweiten Schnittstelle, wobei der Cloud Connector mittels der ersten Schnittstelle mit dem ersten Netzwerkteilnehmer in Verbindung steht und mittels der zweiten Schnittstelle mit dem zweiten Netzwerkteilnehmer in Verbindung steht. Zudem betrifft die Erfindung einen Cloud Connector und ein Verfahren zur Identifikation von Netzwerkgeräten.

In Automatisierungsanlagen werden vielfach Feldgeräte eingesetzt, die zur Erfassung und/oder Beeinflussung von Prozessgrößen dienen. Zur Erfassung von Prozessgrößen dienen Messgeräte, wie beispielsweise Füllstandsmessgeräte, Durchflussmessgeräte, Druck- und Temperaturmessgeräte, pH-Messgeräte, Leitfähigkeitsmessgeräte, usw., welche die entsprechenden Prozessgrößen Füllstand, Durchfluss, Druck, Temperatur, pH-Wert bzw. Leitfähigkeit erfassen. Zur Beeinflussung der Prozessgrößen werden Aktoren verwendet, wie Ventile oder Pumpen, über die z.B. der Durchfluss einer Flüssigkeit in einer Rohrleitung oder der Füllstand eines Mediums in einem Behälter geändert wird. Unter dem in Verbindung mit der Erfindung verwendeten Begriff 'Feldgerät' sind alle Typen von Messgeräten und Aktoren zu subsumieren. Als Feldgeräte werden darüber hinaus in Zusammenhang mit der Erfindung auch alle Geräte bezeichnet, die prozessnah eingesetzt werden und die prozessrelevante Informationen liefern oder verarbeiten. Neben den zuvor genannten Messgeräten/Sensoren und Aktoren werden als Feldgeräte allgemein auch solche Einheiten bezeichnet, die direkt an einem Feldbus angeschlossen sind und zur Kommunikation mit der übergeordneten Einheit dienen, wie z.B. Remote I/Os, Gateways, Linking Devices und Wireless Adapter bzw. Funkadapter, PLC etc.. Üblicherweise sind auf der Feldebene je nach Größe der Anlage mehrere Steuerungen PLC A, PLC B angeordnet. Die Kommunikation zwischen den Steuerungen PLC A, PLC B und den an vorhergehender Stelle bereits näher definierten prozessnahen Feldgeräten A, S, die an eine der Steuerungen PLC A, PLC B angekoppelt sind, erfolgt über zumindest einen der in der Automatisierungstechnik gebräuchlichen Feldbus. Auf der Steuerungsebene liefern die Steuerungen PLC A, PLC B ihre von den Feldgeräten A, S gesammelten Daten und / oder weiterverarbeiteten Messwerte an eine übergeordnete Steuereinheit, z.B. eine SCADA. Die Feldgeräte sind netzwerkfähig ausgestaltet und über ein Netzwerk miteinander verbunden. Jedem Feldgerät ist eine eindeutige Adresse in dem Netzwerk zugeordnet. Dabei erfolgt die Kommunikation über ein definiertes Netzwerkprotokoll.

Wenn Automatisierungsanlagen oder Automatisierungszellen an eine Cloud basierte Infrastruktur angeschlossen werden, dann müssen anzuschließende Geräte zuerst ermittelt, dann die zur Verfügung stehenden Geräteparameter erkannt und kategorisiert und diese dann im Anschluss an die Cloud und den lokalen Cloud Connector weitergegeben werden.

Ein Connector spielt überall dort eine Rolle, wo ein Bindeglied oder eine Schnittstelle benötigt wird. Der Cloud Connector dient hier als Bindeglied zwischen einer Cloudbasierten Application und der Automatisierungsanlage. Dabei kann der Cloud Connector als Agent in einem Netzwerk ausgestalten sein, z.B. als reverse invoke proxy. Während ein typischer Proxy dafür verwendet werden kann, mehreren Clients eines internen Netzes den Zugriff auf ein externes Netz zu gewähren, funktioniert ein Reverse Proxy genau andersherum.

Nachdem der Cloud Connector in eine Automatisierungsanlage oder Automatisierungszelle eingebracht wurde, müssen die anzuschließenden Geräte bisher manuell ergänzt werden. Das bedeutet, dass die notwendigen Merkmale zu einem Gerät zuerst ermittelt und dann eingegeben werden müssen.

Diese Ermittlung erfolgt zur Zeit manuell und muss dann manuell in den Cloud Connector eingegeben werden. Ggf. müssen die Dateneingaben dann zentral (in der Cloud) erneut wiederholt werden.

Die DE 10 2010 063 164 A1 offenbart einen Cloud Connector, der ausgebildet ist, einen Netzwerk-Scan durchzuführen.

Es ist daher eine erste Aufgabe der Erfindung ein vereinfachtes System für eine Anbindung einer Automatisierungsanlage an eine Cloud anzugeben. Eine zweite Aufgabe liegt in der Angabe eines Cloud Connectors für ein solches System. Eine dritte Aufgabe liegt in der Angabe eines Verfahrens für ein solches System.

Die auf das System bezogene Aufgabe wird gelöst durch die Angabe eines Netzwerksystems gemäß Anspruch 1.

Die auf den Cloud Connector bezogene Aufgabe wird gelöst durch die Angabe eines Cloud Connectors gemäß Anspruch 12.

Die auf das Verfahren bezogene Aufgabe wird gelöst durch die Angabe eines Verfahrens gemäß Anspruch 15.

Unter dem zweiten Netzwerkteilnehmer mit Cloud-Computing-Infrastruktur wird nachfolgend eine Cloud verstanden und auch so nachfolgend beschrieben. Cloud Computing beinhaltet Technologien und Geschäftsmodelle um IT-Ressourcen, Applikationen und Services dynamisch zur Verfügung zu stellen. Beim National Institute of Standards and Technology (NIST) wird beispielsweise eine Definition einer "Cloud" gegeben.

Es ist bekannt, dass die notwendigen und benötigten Merkmale zu einem Netzwerkgerät zuerst ermittelt und dann in den Cloud Connector eingegeben werden müssen, d.h. die manuelle Erfassung und Eingabe aller anzuschließenden Geräte.

Es wurde erkannt, dass diese manuelle Ermittlung häufig fehlerbehaftet und dann bei der Umsetzung sowohl lokal als auch zentral mit erheblichem Klärungsaufwand verbunden ist. Dies wird durch die Erfindung nun vermieden.

Die Vorteile der Erfindung liegen in mehrere Dimensionen. Die Fehlerhäufigkeit wird reduziert, indem die Geräte elektronisch identifiziert werden und die angebotenen Services direkt nachgeladen werden können. Die Profile bzw. Identifikationsparameter für gleichartige Geräte werden zentral vorgehalten und können so bei neuen Geräteklassen zentral erstellt und gepflegt werden. Weiterhin werden die Kosten für die Erkennung reduziert. Zudem kann eine große Anzahl an Geräten in kurzer Zeit erkannt werden.

Die Erfindung bewirkt eine zentrale und zügige Erkennung der an die Cloud Lösung angeschlossenen Komponenten sowie eine deutliche Reduzierung der lokalen Anschlussaufwendungen.

Vorzugsweise werden dabei die Netzwerkgeräteprofile mehrerer bis zu allen verfügbaren bzw. durch den passiven Scan erkannten Netzwerkgeräte aus dem zweiten Netzwerkteilnehmer in den Cloud Connector nachgeladen.

Vorzugsweise umfasst das jeweilige Netzwerkgeräteprofil Informationen, die das jeweilige Netzwerkgerät charakterisieren. Insbesondere umfasst das jeweilige Netzwerkgeräteprofil zumindest eine der folgenden Informationen des jeweiligen Netzwerkgerätes: Gerätehersteller, Gerätetyp, Geräteversion, Gerätegeneration, Version der auf dem Netzwerkgerät installierten Software oder Firmware, Einsatzgebiet des Netzwerkgerätes oder ähnliche Charakteristika. Bspw. kann das Netzwerkgeräteprofil somit die Information aufweisen "Siemens Speicherprogrammierbare Steuerungen (SPS) Simatic S7-1500 Version 1, Applikation bei Food & Beverage". Das jeweilige Netzwerkgeräteprofil kann zusätzlich oder alternativ zumindest einen Identifikationsparameter des jeweiligen Netzwerkgerätes umfassen.

In den Unteransprüchen sind weitere vorteilhafte Maßnahmen aufgelistet, die beliebig miteinander kombiniert werden können, um weitere Vorteile zu erzielen.

Bevorzugt werden die Netzwerkgeräteprofile, d.h. die Identifikationsparameter der identifizierten Netzwerkgeräte durch den Cloud Connector erstellt und den einzelnen Netzwerkgeräten zugeordnet. Weiterhin sind zumindest einzelne Netzwerkgeräteprofile aus dem zweiten Netzwerkteilnehmer in den Cloud Connector ladbar. Alternativ oder zusätzlich sind zumindest einzelne Netzwerkgeräteprofile vorab in dem Cloud Connector gespeichert vorhanden.

D.h., der Cloud Connector lädt dann entsprechende Profile (je nach erkanntem Gerät), d.h. die Identifikationsparameter aus der Cloud nach oder hat sie schon vorab mitbekommen, um ein genaueres, rückwirkungsfreies Profiling der identifizierten Geräte durchzuführen.

Bevorzugt werden im Cloud Connector die Identifikationsparameter gespeichert.

In einem bevorzugten Ausführungsbeispiel empfängt bei dem passiven Scan der Cloud Connector Übertragungen, die von den mehreren Netzwerkgeräten initiiert sind. D.h. der Cloud Connector führt einen passiven Scan des ersten Netzwerkteilnehmers durch. Bei einem aktiven Scan des Cloud Connectors werden die Netzwerkgeräte aktiv angesprochen. Der Scan erfolgt, um die vorhandenen Geräte im Groben zu erkennen und so, dass die erkannten Geräte nicht in ihrer Tätigkeit beeinflusst werden.

Bevorzugt weist als Identifikationsparameter jedes Netzwerkgerät eine eindeutige Adresse in dem ersten Netzwerkteilnehmer und andere netzwerkgerätebezogene Daten auf. Andere Identifikationsparameter sind beispielsweise Gerätetyp und/oder Hardwarestand und/oder Softwarestand und/oder Firmwarestand und/oder den angebotenen Service.

In einem bevorzugten Ausführungsbeispiel ist der Cloud Connector in den ersten Netzwerkteilnehmer einbringbar. Der erste Netzwerkteilnehmer kann dabei insbesondere als eine Automatisierungsanlage mit einem Automatisierungsnetzwerk ausgestaltet sein.

Bevorzugt sind in dem Cloud Connector eine Identifizierungsinformation des Cloud Connector und eine Identifizierungsinformation des zweiten Netzwerkteilnehmers hinterlegt. Insbesondere sind diesbezüglich in einem Speicherbereich des Cloud Connectors eine sogenannte ID (engl. für user identifier, unit identifier oder unique identifier) des Cloud Connector, zum Beispiel deren MAC-Adresse (engl.: media access control), und eine ID des zweiten Netzwerkteilnehmers, zum Beispiel die MAC-Adresse oder z.B. die IP-Adresse hinterlegt bzw. gespeichert. Der Cloud Connector ist bereits vorkonfiguriert für eine Verbindung mit einer Cloud. Der Anbieter einer solchen Cloud kann so einen Cloud Connector anbieten, die für seine Cloud-Computing-Infrastruktur vorkonfiguriert sind, und den Installationsaufwand für Feldgeräte an die Cloud verringern bzw. vereinfachen.

Bevorzugt nimmt der Cloud Connector ein Anbindung des ersten Netzwerkteilnehmers an den zweiten Netzwerkteilnehmer von, d.h. er dient zur vereinfachten Anbindung der z.B. Automatisierungsanlage mit dem Automatisierungsnetzwerk an die Cloud.

Dabei findet der erfindungsgemäße Cloud Connector, insbesondre in dem erfindungsgemäßen Netzwerksystem oder in dem Verfahren Verwendung. Ebenso lässt sich das Verfahren auf dem erfindungsgemäßen Netzwerksystem durchführen.

Weitere Merkmale, Eigenschaften und Vorteile der vorliegenden Erfindung ergeben sich aus der nachfolgenden Beschreibung unter Bezugnahme auf die beiliegende Figuren. Darin zeigen schematisch:
FIG 1: ein Beispiel eines erfindungsgemäßen Netzwerksystems,
FIG 2: ein Ausführungsbeispiel eines erfindungsgemäßen Netzwerksystems.

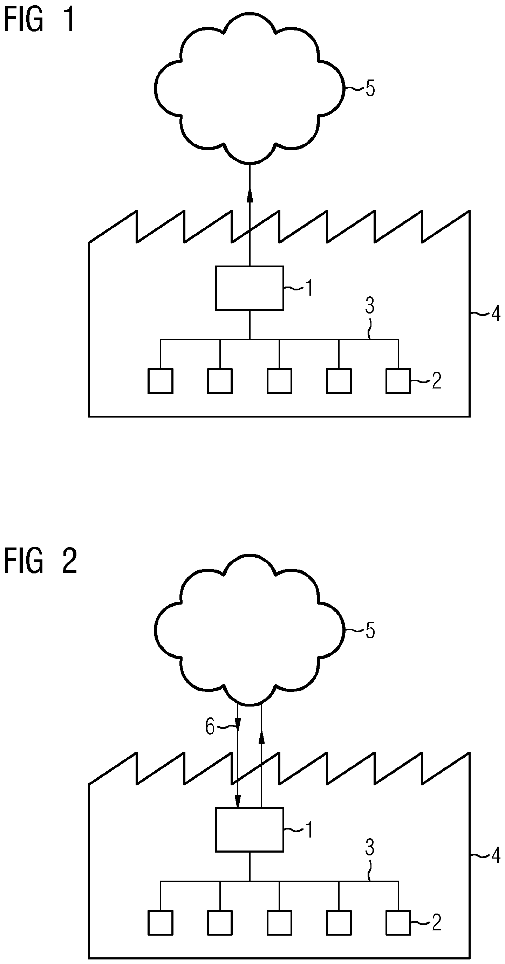

FIG 1 zeigt einen Cloud Connector 1. Dieser wird zur Anbindung der Automatisierungsanlage 4 an eine Cloud 5 in einem Automatisierungsnetzwerk 3 der Automatisierungsanlage 4 angeschlossen. Dabei kann der Cloud Connector 1 auch direkt im Automatisierungsnetzwerk 3 als z.B. Softwareagent installiert werden. Das Automatisierungsnetzwerk 3 weist Netzwerkgeräte 2 auf. Wenn der Cloud Connector 1 in eine Automatisierungsanlage 4 verbracht wird, so bekommt er die notwendigen Informationen, um sich im Netzwerk umzusehen. Dies sind z.B. eine eigene IP-Adresse, eine Verbindung in die Cloud (Routing) etc..

Der Cloud Connector 1 führt dann einen Scan des Automatisierungsnetzwerks 3 mit den Netzwerkgeräten 2 durch. Dazu wird zunächst ein erster passiver Scan, dann ein gezielter aktiver Scan durchgeführt, um die vorhandenen Netzwerkgeräte 2 im Groben erkennen zu können. Die Scans erfolgen so, dass die erkannten Netzwerkgeräte 2 nicht in ihrer Tätigkeit beeinflusst werden. Dabei versteht man unter einem passiver Scan quasi das "Mitlauschen" am Automatisierungsnetzwerk 3. Hier gehen die Initiative von den Netzwerkgeräte 2 aus, d.h. es findet keine direkte Interaktion mit den Netzwerkgeräten 2 statt. Ein aktiver Scan beschreibt das aktive Ansprechen von Netzwerkgeräten 2. Dabei findet ein Rückfluss von Identifikationsparametern zur Identifizierung der Netzwerkgeräte 2 statt. D.h., zunächst wird zuerst der passive Scan, anschließend der aktive Scan durchgeführt.

FIG 2 zeigt, dass der Cloud Connector 1 dann entsprechende Netzwerkgeräteprofils, bspw. Identifikationsparameter und/oder das jeweilige Netzwerkgerät charakterisierende Informationen, wie Gerätetyp, installierte Softwareversion etc., je nach erkanntem Netzwerkgerät 2 aus der Cloud 5 nachlädt (Pfeil 6). Alternativ oder zusätzlich hat der Cloud Connector 1 sie schon vorab mitbekommen, d.h. bei Einbringen in das Automatisierungsnetzwerk 3 installiert. Diese werden nun zugeordnet. Somit kann ein genaueres, rückwirkungsfreies Profil (d.h. alle notwendigen Identifizierungsparameter zu den Netzwerkgeräte 2 zuordnen) der identifizierten Netzwerkgeräte 2 durchgeführt werden.

Durch eine elektronische Identifikation der Netzwerkgeräte 2 wird die Fehlerhäufigkeit reduziert. Auch können z.B. Kosten eingespart werden, wenn die angebotenen Services direkt nachgeladen werden können. Die Profile für gleichartige Netzwerkgeräte 2 werden zentral vorgehalten und können so bei neuen Geräteklassen zentral erstellt und gepflegt werden.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden.

## Patentansprüche

1. Netzwerksystem umfassend
einem ersten Netzwerkteilnehmer mit mehreren Netzwerkgeräten (2), wobei die Netzwerkgeräte (2) zur Identifikation Identifikationsparameter aufweisen,
einem zweiten Netzwerkteilnehmer mit einer Cloud-Computing-Infrastruktur,
sowie einem Cloud Connector (1) mit einer ersten Schnittstelle und einer zweiten Schnittstelle,
wobei der Cloud Connector (1) mittels der ersten Schnittstelle mit dem ersten Netzwerkteilnehmer in Verbindung steht und mittels der zweiten Schnittstelle mit dem zweiten Netzwerkteilnehmer in Verbindung steht,
**dadurch gekennzeichnet, dass** der Cloud Connector (1) ausgebildet ist, einen passiven Scan und einen aktiven Scan des ersten Netzwerkteilnehmers durchzuführen, so dass eine Identifikation von zumindest einem der Netzwerkgeräte (2) durch den Cloud Connector (1) bewerkstelligbar ist, wobei der Cloud Connector (1) ausgebildet ist, zumindest ein Netzwerkgeräteprofil aus dem zweiten Netzwerkteilnehmer in den Cloud Connector (1) zu laden und den aktiven Scan auf Basis des geladenen zumindest einen Netzwerkgeräteprofils durchzuführen.

2. Netzwerksystem nach Anspruch 1,
**dadurch gekennzeichnet, dass** die Identifikationsparameter der identifizierten Netzwerkgeräte (2) durch den Cloud Connector (1) erstellbar und den einzelnen Netzwerkgeräten (2) zuordenbar sind.

3. Netzwerksystem nach Anspruch 2,
**dadurch gekennzeichnet, dass** zumindest einzelne Identifikationsparameter aus dem zweiten Netzwerkteilnehmer in den Cloud Connector (1) ladbar sind.

4. Netzwerksystem nach Anspruch 2 oder 3,
**dadurch gekennzeichnet, dass** zumindest einzelne Identifikationsparameter vorab in dem Cloud Connector (1) gespeichert vorhanden sind.

5. Netzwerksystem nach einem der vorhergehenden Ansprüche 1 bis 4, **dadurch gekennzeichnet, dass** der Cloud Connector (1) die Identifikationsparameter speichert.

6. Netzwerksystem nach einem der vorhergehenden Ansprüche 1 bis 5, **dadurch gekennzeichnet, dass** bei dem passiven Scan der Cloud Connector (1) Übertragungen empfängt, die von zumindest einem Netzwerkgerät (2) initiiert sind.

7. Netzwerksystem nach einem der vorhergehenden Ansprüche 1 bis 6, **dadurch gekennzeichnet, dass** bei einem aktiven Scan der Cloud Connector (1) die Netzwerkgeräte (2) aktiv anspricht.

8. Netzwerksystem nach einem der vorhergehenden Ansprüche 1 bis 7, **dadurch gekennzeichnet, dass** jedes Netzwerkgerät (2) eine eindeutige Adresse in dem ersten Netzwerkteilnehmer und andere netzwerkgerätebezogene Daten aufweist.

9. Netzwerksystem nach Anspruch 8,
**dadurch gekennzeichnet, dass** die anderen netzwerkgerätebezogenen Daten entweder Gerätetyp und/oder Hardwarestand und/oder Softwarestand und/oder Firmwarestand und/oder den angebotenen Service umfassen.

10. Netzwerksystem nach einem der vorhergehenden Ansprüche 1 bis 9, **dadurch gekennzeichnet, dass** der Cloud Connector (1) in den ersten Netzwerkteilnehmer einbringbar ist.

11. Netzwerksystem nach einem der vorhergehenden Ansprüche 1 bis 10, **dadurch gekennzeichnet, dass** der erste Netzwerkteilnehmer als eine Automatisierungsanlage (4) mit einem Automatisierungsnetzwerk (3) ausgestaltet ist.

12. Cloud Connector (1) für ein Netzwerksystem, welcher eine erste Schnittstelle und eine zweite Schnittstelle aufweist, wobei der Cloud Connector (1) mittels der ersten Schnittstelle mit einem ersten Netzwerkteilnehmer mit mehreren Netzwerkgeräten (2) verbindbar ist, wobei die Netzwerkgeräte (2) zur Identifikation Identifikationsparameter aufweisen,
und mittels der zweiten Schnittstelle mit einem zweiten Netzwerkteilnehmer mit einer Cloud-Computing-Infrastruktur verbindbar ist,
**dadurch gekennzeichnet, dass** der Cloud Connector (1) ausgebildet ist, einen passiven Scan und einen aktiven Scan des ersten Netzwerkteilnehmers durchzuführen, so dass eine Identifikation von zumindest einem der Netzwerkgeräte (2) durch den Cloud Connector (1) bewerkstelligbar ist, wobei der Cloud Connector (1) ausgebildet ist, zumindest ein Netzwerkgeräteprofil aus dem zweiten Netzwerkteilnehmer in den Cloud Connector (1) zu laden und den aktiven Scan auf Basis des geladenen zumindest einen Netzwerkgeräteprofils durchzuführen.

13. Cloud Connector (1) nach Anspruch 12,
**dadurch gekennzeichnet, dass** in dem Cloud Connector (1) eine Identifizierungsinformation des Cloud Connectors (1) und eine Identifizierungsinformation des zweiten Netzwerkteilnehmers hinterlegt sind.

14. Cloud Connector (1) nach Anspruch 12, für ein Netzwerksystem nach einem der Ansprüche 1-11.

15. Verfahren zum Betreiben eines Netzwerksystems, welches einen ersten Netzwerkteilnehmer mit mehreren Netzwerkgeräten (2), wobei die Netzwerkgeräte (2) zur Identifikation Identifikationsparameter aufweisen, und einen zweiten Netzwerkteilnehmer mit einer Cloud-Computing-Infrastruktur, aufweist, umfassend die Schritte:
• Bereitstellen eines Cloud Connectors (1), welcher eine erste Schnittstelle und eine zweite Schnittstelle aufweist,
• Verbinden der ersten Schnittstelle mit dem ersten Netzwerkteilnehmer und der zweiten Schnittstelle mit dem zweiten Netzwerkteilnehmer,
• Durchführen eines passiven Scans des ersten Netzwerkteilnehmers durch den Cloud Connector (1),
• Laden zumindest eines Netzwerkgeräteprofils aus dem zweiten Netzwerkteilnehmer in den Cloud Connector (1),
• Durchführen eines aktiven Scans des ersten Netzwerkteilnehmers durch den Cloud Connector (1), wobei der aktive Scan auf Basis des geladenen zumindest einen Netzwerkgeräteprofils erfolgt,
• Durchführen einer Identifikation von zumindest einem der Netzwerkgeräte (2) durch den Cloud Connector (2).

16. Verfahren nach Anspruch 15,
**dadurch gekennzeichnet, dass** die Identifikationsparameter der identifizierten Netzwerkgeräte (2) durch den Cloud Connector (1) erstellt und den einzelnen Netzwerkgeräten (2) zugeordnet werden.

17. Verfahren nach Anspruch 16,
**dadurch gekennzeichnet, dass** zumindest einzelne Identifikationsparameter aus dem zweiten Netzwerkteilnehmer in den Cloud Connector (1) geladenen werden.

18. Verfahren nach Anspruch 16 oder 17,
**dadurch gekennzeichnet, dass** zumindest einzelne Identifikationsparameter vorab in dem Cloud Connector (1) gespeichert werden.

19. Verfahren einem der vorhergehenden Ansprüche 15 bis 18,
**dadurch gekennzeichnet, dass** der Cloud Connector (1) ein Anbindung des ersten Netzwerkteilnehmers an den zweiten Netzwerkteilnehmer vornimmt.

20. Verfahren einem der vorhergehenden Ansprüche 15 bis 19,
**dadurch gekennzeichnet, dass** bei dem passiven Scan der Cloud Connector (1) Übertragungen empfängt, die von zumindest einem Netzwerkgerät (2) initiiert werden.

21. Verfahren einem der vorhergehenden Ansprüche 15 bis 20,
**dadurch gekennzeichnet, dass** bei einem aktiven Scan der Cloud Connector (1) die Netzwerkgeräte (2) aktiv anspricht.

22. Verfahren nach einem der vorhergehenden Ansprüche 15 bis 21, **dadurch gekennzeichnet, dass** der Cloud Connector (1) in den ersten Netzwerkteilnehmer eingebracht wird.

## Claims

1. Network system comprising
a first network user with a number of network devices (2), wherein the network devices (2) have identification parameters for identification,
a second network user with a cloud computing infrastructure,
as well as a cloud connector (1) with a first interface and a second interface,
wherein the cloud connector (1) is connected by means of the first interface to the first network user and is connected by means of the second interface to the second network user,
**characterised in that** the cloud connector (1) is embodied to carry out a passive scan and an active scan of the first network user, so that an identification of at least one of the network devices (2) by the cloud connector (1) is able to be effected,
wherein the cloud connector (1) is embodied to load at least one network device profile from the second network user into the cloud connector (1), and to carry out the active scan on the basis of the at least one network device profile loaded.

2. Network system according to claim 1,
**characterised in that** the identification parameters of the identified network devices (2) are able to be created by the cloud connector (1) and assigned to the individual network devices (2).

3. Network system according to claim 2,
**characterised in that** at least individual identification parameters are able to be loaded from the second network user into the cloud connector (1).

4. Network system according to claim 2 or 3,
**characterised in that** at least individual identification parameters are present stored beforehand in the cloud connector (1).

5. Network system according to one of the preceding claims 1 to 4, **characterised in that** the cloud connector (1) stores the identification parameters.

6. Network system according to one of the preceding claims 1 to 5, **characterised in that**, during the passive scan, the cloud connector (1) receives transmissions, which are initiated by at least one network device (2).

7. Network system according to one of the preceding claims 1 to 6, **characterised in that**, during an active scan, the cloud connector (1) actively addresses the network devices (2) .

8. Network system according to one of the preceding claims 1 to 7, **characterised in that** each network device (2) has a unique address in the first network user and other network-device-related data.

9. Network system according to claim 8,
**characterised in that** the other network-device-related data comprises either device type and/or hardware status and/or software status and/or firmware status and/or the service provided.

10. Network system according to one of the preceding claims 1 to 9, **characterised in that** the cloud connector (1) is able to be brought into the first network user.

11. Network system according to one of the preceding claims 1 to 10, **characterised in that** the first network user is embodied as an automation system (4) with an automation network (3).

12. Cloud connector (1) for a network system, which has a first interface and a second interface, wherein the cloud connector (1) is able to be connected by means of the first interface to a first network user with a number of network devices (2), wherein the network devices (2) have identification parameters for identification,
and is able to be connected by means of the second interface to a second network user with a cloud computing infrastructure,
**characterised in that** the cloud connector (1) is embodied to carry out a passive scan and an active scan of the first network user, so that an identification of at least one of the network devices (2) is able to be effected by the cloud connector (1),
wherein the cloud connector (1) is embodied to load at least one network device profile from the second network user into the cloud connector (1),
and to carry out the active scan on the basis of the at least one network device profile loaded.

13. Cloud connector (1) according to claim 12,
**characterised in that** identification information of the cloud connector (1) and identification information of the second network user are held in the cloud connector (1).

14. Cloud connector (1) according to claim 12 for a network system according to one of claims 1-11.

15. Method for operating a network system, which has a first network user with a number of network devices (2), wherein the network devices (2) have identification parameters for identification, and has a second network user with a cloud computing infrastructure, comprising the steps:
• Provision of a cloud connector (1), which has a first interface and a second interface,
• Connection of the first interface to the first network user and of the second interface to the second network user,
• Carrying out of passive scans of the first network user by the cloud connector (1),
• Loading of at least one network device profile from the second network user into the cloud connector (1),
• Carrying out of active scans of the first network user by the cloud connector (1), wherein the active scan is undertaken on the basis of the at least one network device profile loaded,
• Carrying out of an identification of at least one of the network devices (2) by the cloud connector (2).

16. Method according to claim 15,
**characterised in that** the identification parameters of the identified network devices (2) are created by the cloud connector (1) and assigned to the individual network devices (2) .

17. Method according to claim 16,
**characterised in that** at least individual identification parameters are loaded from the second network user into the cloud connector (1).

18. Method according to claim 16 or 17,
**characterised in that** at least individual identification parameters are stored beforehand in the cloud connector (1).

19. Method according to one of the preceding claims 15 to 18,
**characterised in that** the cloud connector (1) makes a link between the first network user and the second network user.

20. Method according to one of the preceding claims 15 to 19,
**characterised in that**, during the passive scan, the cloud connector (1) receives transmissions, which are initiated by at least one network device (2).

21. Method according to one of the preceding claims 15 to 20,
**characterised in that**, during an active scan, the cloud connector (1) actively addresses the network devices (2) .

22. Method according to one of the preceding claims 15 to 21,
**characterised in that** the cloud connector (1) is brought into the first network user.

## Revendications

1. Système de réseau comprenant
un premier participant au réseau ayant plusieurs appareils (2) de réseau, les appareils (2) de réseau ayant, pour l'identification, des paramètres d'identification,
un deuxième participant au réseau ayant une infrastructure cloud-computing,
ainsi qu'un connecteur (1) cloud ayant une première interface et une deuxième interface,
dans lequel le connecteur (1) cloud est en liaison avec le premier participant au réseau au moyen de la première interface et avec le deuxième participant au réseau au moyen de la deuxième interface,
**caractérisé en ce que** le connecteur (1) cloud est constitué pour effectuer un balayage passif et un balayage actif du premier participant au réseau, de manière à ce qu'une identification d'au moins l'un des appareils (2) de réseau soit réalisée par le connecteur (1) cloud,
dans lequel le connecteur (1) cloud est constitué pour charger, dans le connecteur (1) cloud, au moins un profil d'appareil de réseau du deuxième participant au réseau et pour effectuer le balayage actif sur la base du au moins un profil d'appareil de réseau, qui a été chargé.

2. Système de réseau suivant la revendication 1,
**caractérisé en ce que** les paramètres d'identification des appareils (2) de réseau identifiés peuvent être établis par le connecteur (1) cloud et être affectés aux divers appareils (2) de réseau.

3. Système de réseau suivant la revendication 2,
**caractérisé en ce qu'**au moins certains paramètres d'identification du deuxième participant au réseau peuvent être chargés dans le connecteur (1) cloud.

4. Système de réseau suivant la revendication 2 ou 3,
**caractérisé en ce qu'**au moins certains paramètres d'identification sont mémorisés à l'avance dans le connecteur (1) cloud.

5. Système de réseau suivant l'une des revendications 1 à 4,
**caractérisé en ce que** le connecteur (1) cloud mémorise des paramètres d'identification.

6. Système de réseau suivant l'une des revendications 1 à 5,
**caractérisé en ce que**, lors du balayage passif, le connecteur (1) cloud reçoit des émissions lancées par au moins un appareil (2) de réseau.

7. Système de réseau suivant l'une des revendications précédentes 1 à 6,
**caractérisé en ce que**, lors d'un balayage actif, le connecteur (1) cloud réagit activement aux appareils (2) de réseau.

8. Système de réseau suivant l'une des revendications précédentes 1 à 7,
**caractérisé en ce que** chaque appareil (2) de réseau a une adresse univoque dans le premier participant au réseau et d'autres données se rapportant à l'appareil de réseau.

9. Système de réseau suivant la revendication 8,
**caractérisé en ce que** les autres données se rapportant à l'appareil de réseau comprennent le type d'appareil et/ou l'état du matériel et/ou l'état du logiciel et/ou l'état d'un microprogramme et/ou le service offert.

10. Système de réseau suivant l'une des revendications précédentes 1 à 9,
**caractérisé en ce que** le connecteur (1) cloud peut être mis dans le premier participant au réseau.

11. Système de réseau suivant l'une des revendications précédentes 1 à 10,
**caractérisé en ce que** le premier participant au réseau est conformé en installation (4) d'automatisation ayant un réseau (3) d'automatisation.

12. Connecteur (1) cloud pour un système de réseau, qui a une première interface et une deuxième interface, le connecteur (1) cloud pouvant, au moyen de la première interface, être relié à un premier participant au réseau ayant plusieurs appareils (2) de réseau, les appareils (2) de réseau ayant, pour l'identification, des paramètres d'identification, et pouvant, au moyen de la deuxième interface, être relié à un deuxième participant au réseau ayant une infrastructure cloud-computing,
**caractérisé en ce que** le connecteur (1) cloud est constitué pour effectuer un balayage passif et un balayage actif du premier participant au réseau, de manière à pouvoir effectuer, par le connecteur (1) cloud, une identification d'au moins l'un des appareils (2) de réseau,
le connecteur (1) cloud étant constitué pour charger, dans le connecteur (1) cloud, au moins un profil d'appareil de réseau du deuxième participant au réseau et effectuer le balayage actif sur la base du au moins un profil d'appareil de réseau, qui a été chargé.

13. Connecteur (1) cloud suivant la revendication 12,
**caractérisé en ce que**, dans le connecteur (1) cloud, sont mémorisées une information d'identification du connecteur (1) cloud et une information d'identification du deuxième participant au réseau.

14. Connecteur (1) cloud suivant la revendication 12,
pour un système de réseau suivant l'une des revendications 1 à 11.

15. Procédé pour faire fonctionner un système de réseau qui a un premier participant au réseau ayant plusieurs appareils (2) de réseau, les appareils (2) de réseau ayant, pour l'identification, des paramètres d'identification, et un deuxième participant au réseau ayant une infrastructure cloud-computing, comprenant les stades :
• on se procure un connecteur (1) cloud, qui a une première interface et une deuxième interface,
• on relie la première interface au premier participant au réseau et la deuxième interface au deuxième participant au réseau,
• on effectue un balayage passif du premier participant au réseau par le connecteur (1) cloud,
• on charge au moins un profil d'appareil de réseau du deuxième participant au réseau dans le connecteur (1) cloud,
• on effectue un balayage actif du premier participant au réseau par le connecteur (1) cloud, le balayage actif s'effectuant sur la base du au moins un profil d'appareil de réseau qui a été chargé,
• on effectue une identification du au moins l'un des appareils (1) cloud.

16. Procédé suivant la revendication 15,
**caractérisé en ce que** l'on établit, par le connecteur (1) cloud, les appareils d'identification des appareils (2) de réseau identifiés et on les affecte aux divers appareils (2) de réseau.

17. Procédé suivant la revendication 16,
**caractérisé en ce que** l'on charge, dans le connecteur (1) cloud, au moins divers paramètres d'identification du deuxième participant au réseau.

18. Procédé suivant la revendication 16 ou 17,
**caractérisé en ce que** l'on met en mémoire à l'avance, dans le connecteur (1) cloud, au moins divers paramètres d'identification.

19. Procédé suivant l'une des revendications précédentes 15 à 18,
**caractérisé en ce que** le connecteur (1) cloud effectue une liaison du premier participant au réseau au deuxième participant au réseau.

20. Procédé suivant l'une des revendications précédentes 15 à 19,
**caractérisé en ce que**, lors du balayage passif, le connecteur (1) cloud reçoit des émissions lancées par au moins un appareil (2) de réseau.

21. Procédé suivant l'une des revendications précédentes 15 à 20,
**caractérisé en ce que**, lors d'un balayage actif, le connecteur (1) cloud réagit activement aux appareils (2) de réseau.

22. Procédé suivant l'une des revendications précédentes 15 à 21,
**caractérisé en ce que** l'on met le connecteur (1) cloud dans le premier participant au réseau.
